(19) Europäisches Patentamt
European Patent Office
Office européen des brevets

(11) Veröffentlichungsnummer: **0 006 184**
**B1**

(12) # EUROPÄISCHE PATENTSCHRIFT

(45) Veröffentlichungstag der Patentschrift: **25.11.81**

(51) Int. Cl.³: **C 07 F 7/10**, A 01 N 55/00, A 01 N 47/34

(21) Anmeldenummer: **79101793.2**

(22) Anmeldetag: **07.06.79**

(54) **1-Trimethylsilylphenyl-3-mono- und -di-halobenzoyl-harnstoffe, Verfahren zu ihrer Herstellung, Mittel welche diese Harnstoffe enthalten und deren Verwendung zur Bekämpfung von Insekten.**

(30) Priorität: **15.06.78 CH 6533/78**

(43) Veröffentlichungstag der Anmeldung: **09.01.80 Patentblatt 80/1**

(45) Bekanntmachung des Hinweises auf die Patenterteilung: **25.11.81 Patentblatt 81/47**

(84) Benannte Vertragsstaaten: **AT BE CH DE FR GB IT NL**

(56) Entgegenhaltungen: **FR-A-2 091 640**

(73) Patentinhaber: **CIBA-GEIGY AG, Patentabteilung Postfach, CH-4002 Basel (CH)**

(72) Erfinder: **Böger, Manfred, Lindenstrasse 33, D-7858 Weil am Rheim 5 (DE)**
Erfinder: **Drabek, Jozef, Dr., Benkenstrasse 12, CH-4104 Oberwil (CH)**

**EP 0 006 184 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# 1-Trimethylsilylphenyl-3-mono- und -di-halobenzoyl-harnstoffe, Verfahren zu ihrer Herstellung, Mittel welche diese Harnstoffe enthalten und deren Verwendung zur Bekämpfung von Insekten

Die vorliegende Erfindung betrifft neue 1-Trimethylsilylphenyl-3-mono- und -di-halobenzoyl-harnstoffe, welche eine Wirkung gegen Insekten aufweisen, und Verfahren zu ihrer Herstellung sowie insektizide Mittel, welche die vorstehend genannten Harnstoffe als aktive Komponente enthalten, und deren Verwendung zur Bekämpfung von Insekten.

1-Phenyl-3-benzoyl-harnstoffe mit insektizider vor allem larvizider Wirkung sind aus der französischen Patentschrift FR-A-2 091 640 (entsprechend der GB-A-1 324 293) bekannt. Diese Verbindungen sind ausgesprochene Fraßgifte. Nach vorliegender Erfindung werden neuartige Verbindungen dieses Typs bereitgestellt, welche eine besonders starke Wirkung gegen Insekten aufweisen.

Die erfindungsgemäßen, neuen 1-Trimethylsilylphenyl-3-mono- und -di-halobenzoyl-harnstoffe entsprechen der Formel I

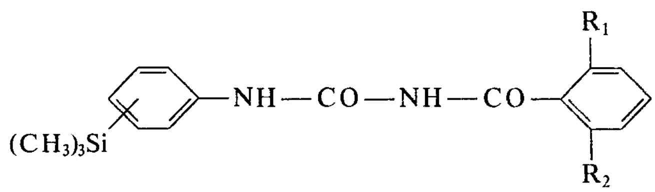

(I)

worin $R_1$ ein Fluor- oder Chloratom und $R_2$ ein Wasserstoff-, Fluor- oder Chloratom bedeuten.

Wegen ihrer Wirkung bevorzugt sind die Verbindungen der Formel IA

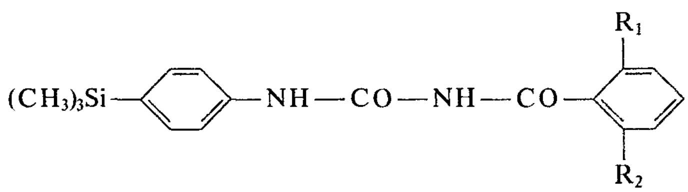

(IA)

worin $R_1$ und $R_2$ die unter Formel I bereits angegebenen Bedeutungen haben.

Die erfindungsgemäßen Verbindungen der Formel I werden zweckmäßig nach an sich bekannten Methoden dadurch erhalten, daß man z. B.

a) eine Verbindung der Formel II

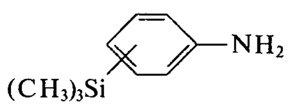

(II)

mit einer Verbindung der Formel III

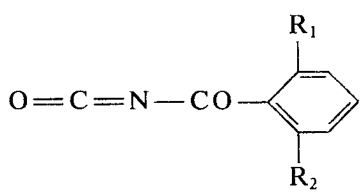

(III)

umsetzt; oder, daß man

b) eine Verbindung der Formel IV

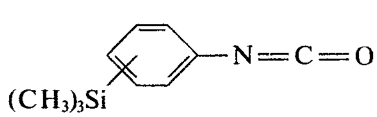

(IV)

mit einer Verbindung der Formel V

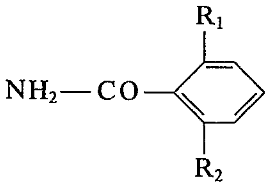

(V)

reagieren läßt; wobei in den Formeln III und V $R_1$ und $R_2$ die unter Formel I bereits angegebenen Bedeutungen haben

Vorzugsweise wird das Verfahren (a) bei einer Reaktionstemperatur zwischen 20° und 40°C gegebenenfalls in Gegenwart einer katalytischen Menge einer Base (z. B. tertiäre Amine, Pyridin und Triäthylendiamin) und das Verfahren (b) bei einer Reaktionstemperatur zwischen 100° und 150°C vorgenommen. Beide Verfahren können bei normalem oder leicht erhöhtem Druck vorzugsweise in Gegenwart eines gegenüber den Reaktionsteilnehmern inerten Lösungs- oder Verdünnungsmittels durchgeführt.

Als Lösungs- oder Verdünnungsmittel eignen sich z. B. Äther und ätherartige Verbindungen wie Diäthyläther, Di-isopropyläther, Dioxan und Tetrahydrofuran; aliphatische und aromatische Kohlenwasserstoffe insbesondere Benzol, Toluol und Xylole; und Ketone wie Aceton, Methyläthylketon und Cyclohexanon.

Die Ausgangsstoffe der Formel II, III, IV und V sind bekannt bzw. können analog bekannten Methoden hergestellt werden.

Die erfindungsgemäßen Verbindungen der Formel I und insbesondere diejenigen der Formel IA zeichnen sich durch eine starke insektizide Wirkung aus, wobei ihre Wirkung gegen alle Entwicklungsstadien (Adulte, Puppen, Larven und auch Eier) von Insekten der Ordnung Lepidoptera und von allem der Familie Noctuidae (wie z. B. Spodoptera littoralis und Laspeyresia pomonella) besonders ausgeprägt ist. Die Verbindungen der Formel I bzw. IA sind demzufolge erfindungsgemäß zur Bekämpfung von pflanzenschädigenden Insekten in Kulturen von Nutz- und Zierpflanzen, insbesondere in Baumwolle-, Obst- und Gemüsekulturen, besonders geeignet.

Die insektizide Wirkung der erfindungsgemäßen Verbindungen läßt sich durch Zusatz von anderen Insektiziden und/oder Akariziden wesentlich verbreiten und an gegebene Umstände anpassen.

Als Zusätze eignen sich z. B.: org. Phosphorverbindungen; Nitrophenole und deren Derivate; Formamidine; Harnstoffe; pyrethrinartige Verbindungen; Karbamate und chlorierte Kohlenwasserstoffe.

Die Verbindungen der Formel I können für sich allein oder zusammen mit geeigneten Trägern und/oder Zuschlagstoffen eingesetzt werden. Geeignete Träger und Zuschlagstoffe können fest oder flüssig sein und entsprechen den in der Formulierungstechnik üblichen Stoffen wie z. B. natürlichen oder regenerierten Stoffen, Lösungs-, Dispergier-, Netz-, Haft-, Verdickungs- Binde- und/oder Düngemitteln.

Zur Applikation können die Verbindungen der Formel I zu Stäubemitteln, Emulsionskonzentraten, Granulaten, Dispersionen, Sprays, zu Lösungen oder Aufschlämmungen in üblicher Formulierung die in der Applikationstechnik zum Allgemeinwissen gehören, verarbeitet werden.

Die Herstellung erfindungsgemäßer Mittel erfolgt in an sich bekannter Weise durch inniges Vermischen und/oder Vermahlen von Verbindungen der Formel I mit den geeigneten Trägerstoffen, gegebenenfalls unter Zusatz von gegenüber den Wirkstoffen inerten Dispergier- oder Lösungsmitteln. Die Wirkstoffe (Verbindungen der Formel I) können in den folgenden Aufarbeitungsformen vorliegen und angewendet werden:

Feste Aufarbeitungsformen:

Stäubemittel, Streumittel und Granulate (Umhüllungsgranulate, Imprägnierungsgranulate und Homogengranulate):

Flüssige Aufarbeitungsformen:

a) in Wasser dispergierbare Spritzpulver, Pasten und Emulsionen:
b) Lösungen.

Der Gehalt an Wirkstoff (Verbindung der Formel I) in den oben beschriebenen Mitteln liegt zwischen 0,1 bis 95%, dabei ist zu erwähnen, daß bei der Applikation aus dem Flugzeug oder mittels anderer geeigneter Applikationsgeräte auch höhere Konzentrationen eingesetzt werden können.

Die Wirkstoffe der Formel I können beispielsweise wie folgt formuliert werden:

Stäubemittel:

Zur Herstellung eines a) 5%igen Stäubemittels werden die folgenden Stoffe verwendet:

a) 5 Teile Wirkstoff
95 Teile Talkum;

b) 2 Teile Wirkstoff
1 Teil hochdisperse Kieselsäure
97 Teile Talkum.

Die Wirkstoffe werden mit den Trägerstoffen vermischt und vermahlen.

Granulat:

Zur Herstellung eines 5%igen Granulates werden die folgenden Stoffe verwendet:

5 Teile Wirkstoff
0,25 Teile Epichlorhydrin
0,25 Teile Cetylpolyglykoläther
3,50 Teile Polyäthylenglykol
91 Teile Kaolin (Korngröße 0,3—0,8 mm).

Der Wirkstoff wird mit Epichlorhydrin vermischt und mit 6 Teilen Aceton gelöst, hierauf wird Polyäthylenglykol und Cetylpolyglykoläther zugesetzt. Die so erhaltene Lösung wird auf Kaolin aufgesprüht und anschließend das Aceton im Vakuum verdampft.

Spritzpulver:

Zur Herstellung eines a) 40%igen, b) und c) 25%igen, d) 10%igen Spritzpulvers werden folgende Bestandteile verwendet:

a) 40 Teile Wirkstoff,
5 Teile Lignisulfonsäure-Natriumsalz,
1 Teil Dibutylnaphthalinsulfonsäure-Natriumsalz,
54 Teile Kieselsäure;

b) 25 Teile Wirkstoff,
4,5 Teile Calcium-Ligninsulfonat,
1,9 Teile Champagne-Kreide/Hydroxyäthylcellulose-Gemisch (1 : 1)
1,5 Teile Natrium-dibutyl-naphthalinsulfonat,
19,5 Teile Kieselsäure,
19,5 Teile Champagne-Kreide,
28,1 Teile Kaolin;

c) 25 Teile Wirkstoff,
2,5 Teile Isooctylphenoxy-polyäthylen-äthanol,
1,7 Teile Champagne-Kreide/Hydroxyäthylcellulose-Gemisch (1 : 1),
8,3 Teile Natriuminiumsilikat,
16,5 Teile Kieselgur,
46 Teile Kaolin;

d) 10 Teile Wirkstoff,
3 Teile Gemisch der Natriumsalze von gesättigten Fettalkoholsulfaten,
5 Teile Naphthalinsulfonsäure/Formaldehyd-Kondensat,
82 Teile Kaolin;

Die Wirkstoffe werden in geeigneten Mischern mit den Zuschlagsstoffen innig vermischt und auf entsprechenden Mühlen und Walzen vermahlen. Man erhält Spritzpulver, die sich mit Wasser zu Suspensionen der gewünschten Konzentration verdünnen lassen.

Emulgierbare Konzentrate:

Zur Herstellung eines a) 10%igen b) 25%igen und c) 50%igen emulgierbaren Konzentrates werden folgende Stoffe verwendet:

a) 10 Teile Wirkstoff,
3,4 Teile epoxydiertes Pflanzenöl,
3,4 Teile eines Kombinationsemulgators, bestehend aus Fettalkoholpolyglykoläther und Alkylarylsulfonat-Calcium-Salz,
40 Teile Dimethylformamid und
43,2 Teile Xylol;

b) 25 Teile Wirkstoff,
2,5 Teile epoxydiertes Pflanzenöl,
10 Teile eines Alkylarylsulfonat/Fettalkoholpolyglykoläther-Gemisches,
5 Teile Dimethylformamid und
57,5 Teile Xylol;

c) 50 Teile Wirkstoff,
4,2 Teile Tributylphenol-Polyglykoläther,
5,8 Teile Ca-Dodecylbenzolsulfonat,
20 Teile Cyclohexanon,
20 Teile Xylol.

Aus solchen Konzentraten können durch Verdünnen mit Wasser Emulsionen der gewünschten Konzentration hergestellt werden.

Sprühmittel:

Zur Herstellung eines 5%igen Sprühmittels werden die folgenden Bestandteile verwendet:

5 Teile Wirkstoff,
1 Teil Epichlorhydrin,
94 Teile Benzin (Siedegrenzen 160—190° C)

Die nachfolgenden Beispiele dienen zur näheren Erläuterung der Erfindung:

Beispiel 1

Herstellung von 1-(4-Trimethylsilylphenyl)-3-(2,6-difluorobenzoyl)-harnstoff

Zu einer Mischung von 5,4 g 4-Trimethylsilylanilin, 50 ml Toluol und 100 mg Triäthylendiamin wurde bei Raumtemperatur eine Lösung von 6,0 g 2,6-Difluorobenzoylisocyanat in 20 ml Toluol zugetropft. Anschließend wurde das erhaltene Reaktionsgemisch 3 Stunden bei 60°C gerührt. Nach dem Eindampfen der Reaktionsmischung und Umkristallisation des Rückstandes aus Aceton erhielt man den 1-(4-Trimethylsilylphenyl)-3-(2,6-difluorobenzoyl)-harnstoff der Formel

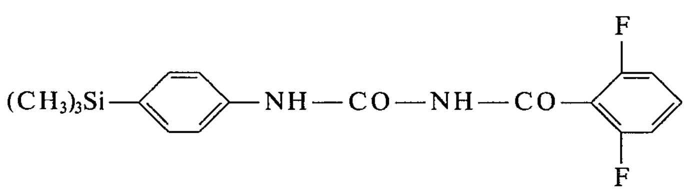

(Verbindung Nr. 1)

als ein weißes Pulver mit einem Schmelzpunkt von 187—189° C.
Die folgenden Verbindungen können auf analoge Weise erhalten werden:

Verbindung
Nr.

2. 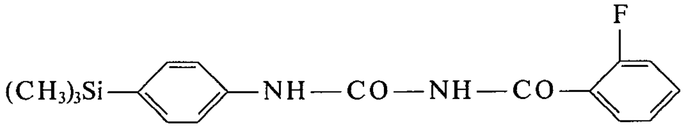 Schmp. 136–138°C

3. 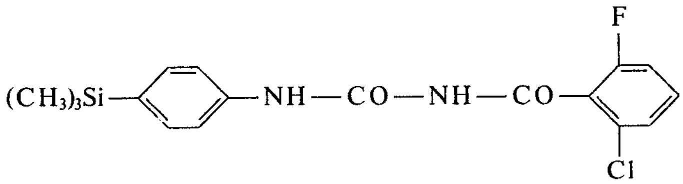

4. 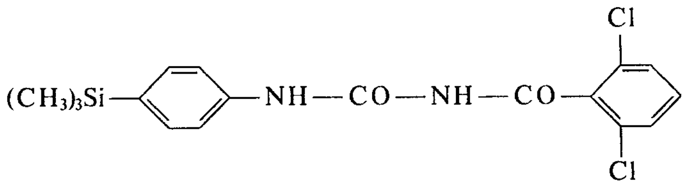 Schmp. 178–179°C

5. 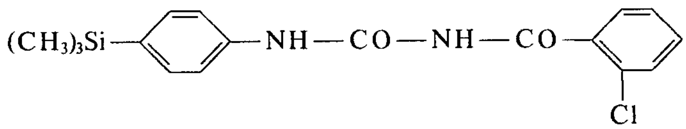 Schmp. 157–158°C

6. 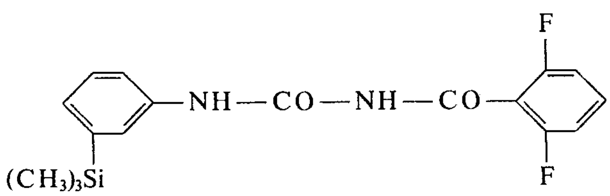 Schmp. 175–176°C

7. 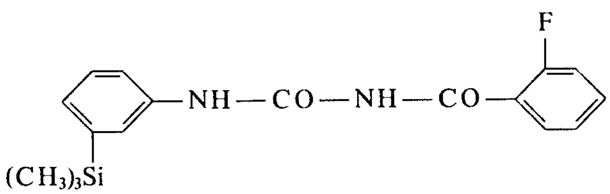 Schmp. 136–138°C

8. 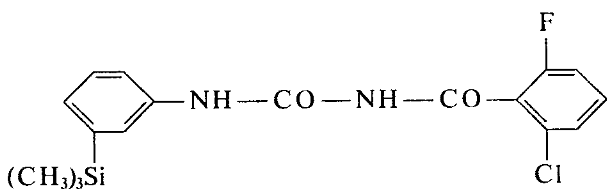

9. 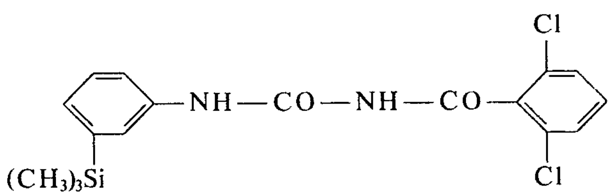 Schmp. 179–180°C

10. 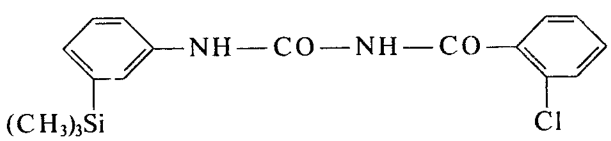 Schmp. 150–152°C

11. 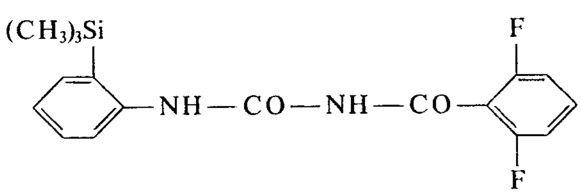

## Beispiel 2

### Insektizide Fraßgift-Wirkung: Spodoptera littoralis, Heliothis virescens und Dysdercus fasciatus

Baumwollpflanzen wurden mit einer wäßrigen Emulsion enthaltend 0,05% der zu prüfenden Verbindung (erhalten aus einem 10%igen emulgierbaren Konzentrat) besprüht. Nach dem Antrocknen des Belages wurden die Pflanzen je mit Larven der Spezies

a) Spodoptera littoralis (L3);
b) Heliothis virescens (L3/L4); oder
c) Dysdercus fasciatus (L5),

besiedelt. Man verwendete pro Versuchsverbindung und pro Test-Spezies zwei Pflanzen und eine Auswertung der erzielten Abtötung erfolgte 2, 4, 24 und 48 Stunden nach Versuchsbeginn.

Der Versuch wurde bei 24° C und 60% relativer Luftfeuchtigkeit durchgeführt.

Verbindungen gemäß Beispiel 1 insbesondere die Verbindungen 1 bis 5 zeigten im obigen Versuch eine positive Fraßgift-Wirkung gegen Larven der erwähnten Spezies.

## Beispiel 3

### Wirkung gegen Eier der Spezies Spodoptera littoralis und Laspeyresia pomonella

Eintägige Eier der Spezies Spodoptera littoralis bzw. Laspeyresia pomonella wurden auf eine Alufolie abgelegt und während 1 Minute in eine Emulsion, welche 40% der zu prüfenden Verbindung enthielt, eingetaucht. Nach dem Abtrocknen wurden die Eier der beiden Spezies bei einer Temperatur von 28°C und bei 50% relativer Luftfeuchtigkeit aufbewahrt. Eine Auswertung der Anzahl von nichtausgeschlüpften Eiern erfolgte bei der Spezies Spodoptera littoralis 4 Tage und bei der Spezies Laspeyresia promonoella 6 Tage nach Behandlung mit der Test-Emulsion.

Verbindungen gemäß Beispiel 1, insbesondere die Verbindungen 1 bis 5 zeigten im obigen Versuch eine starke Wirkung gegen Eier der beiden erwähnten Test-Spezies (Anzahl der ausgeschlüpften Eier gering bis 0%).

**Patentansprüche für die benannten Vertragsstaaten; BE, CH, DE, FR, GB, IT, NL**

1. Eine Verbindung der Formel I

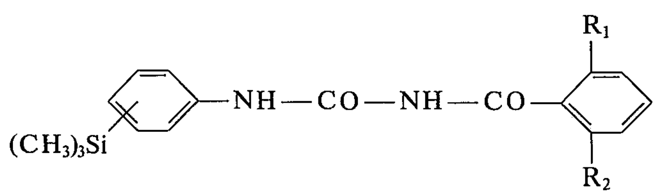

(I)

worin $R_1$ ein Fluor- oder Chloratom und $R_2$ ein Wasserstoff-, Fluor- oder Chloratom bedeuten.

2. Verbindung nach Anspruch 1 der Formel IA

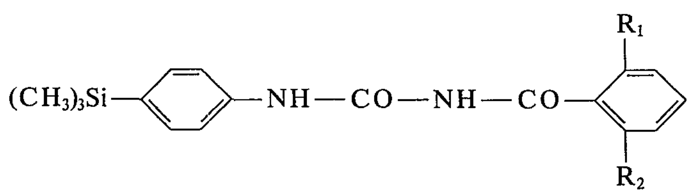

(IA)

worin $R_1$ und $R_2$ die im Anspruch 1 bereits angegebenen Bedeutungen haben.

3. Verbindung nach Anspruch 2 der Formel

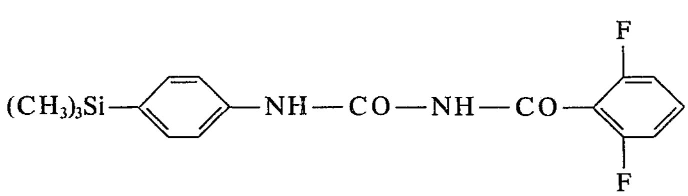

4. Verbindung nach Anspruch 2 der Formel

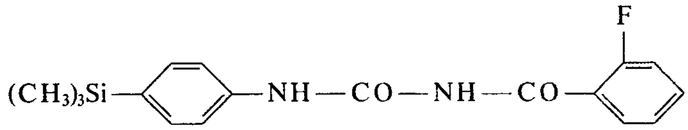

5. Verbindung nach Anspruch 2 der Formel

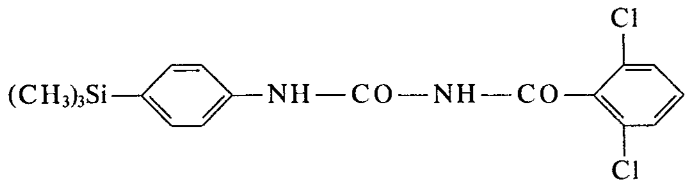

6. Verbindung nach Anspruch 2 der Formel

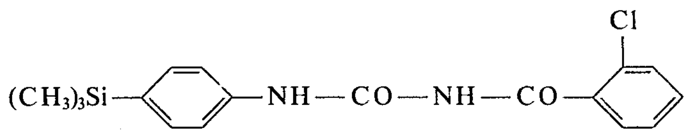

7. Verfahren nzur Herstelllng von in einem der Ansprüche 1 bis 6 genannten Verbindungen, dadurch gekennzeichnet, daß man eine Verbindung der Formel II

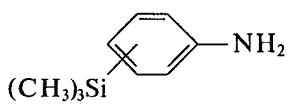

(II)

mit einer Verbindung der Formel III

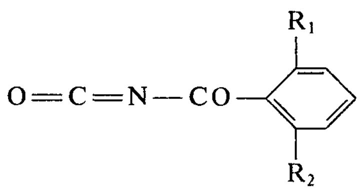

(III)

worin $R_1$ und $R_2$ die entsprechenden, in einem der Ansprüche 1 bis 6 angegebenen Bedeutungen haben, umsetzt oder eine Verbindung der Formel IV

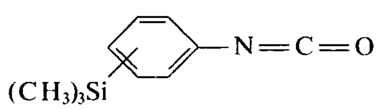

(IV)

mit einer Verbindung der Formel V

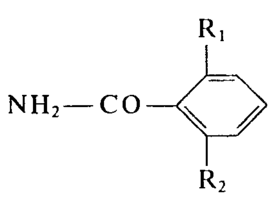

(V)

worin $R_1$ nur $R_2$ die oben angegebenen Bedeutungen haben, umsetzt.

8. Insektizides Mittel enthaltend als aktive Komponente eine der in einem der Ansprüche 1 bis 6 genannten Verbindungen.

9. Verwendung von einer der in einem der Ansprüche 1 bis 6 genannten Verbindungen zur Bekämpfung von Insekten.

**Patentansprüche für den benannten Vertragsstaat: AT**

1. Insektizides Mittel enthaltend als aktive Komponente eine Verbindung der Formel I

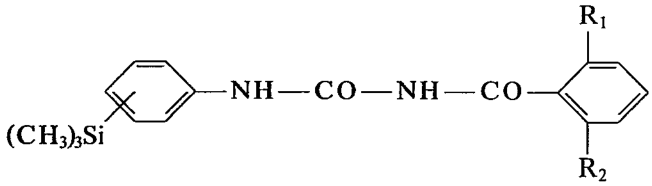

worin $R_1$ ein Fluor- oder Chloratom und $R_2$ ein Wasserstoff-, Fluor- oder Chloratom bedeuten.

2. Insektizides Mittel nach Anspruch 1 enthaltend eine Verbindung der Formel IA

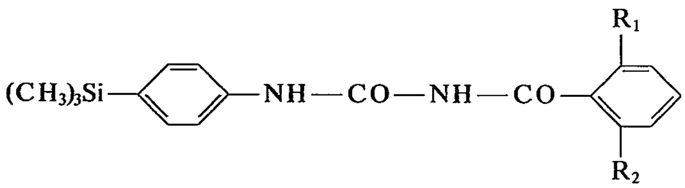

(IA)

worin $R_1$ und $R_2$ die im Anspruch 1 bereits angegebenen Bedeutungen haben.

3. Insektizides Mittel nach Anspruch 2 enthaltend eine Verbindung der Formel

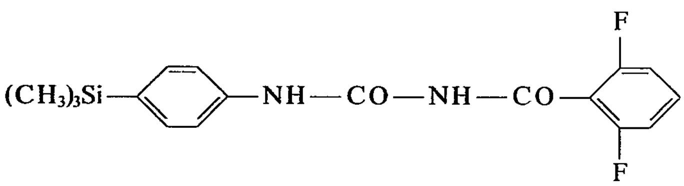

4. Insektizides Mittel nach Anspruch 2 enthaltend eine Verbindung der Formel

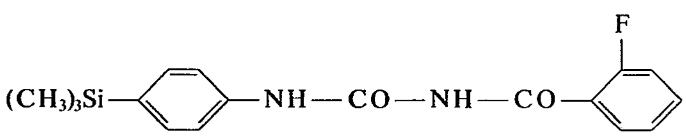

5. Insektizides Mittel nach Anspruch 2 enthaltend eine Verbindung der Formel

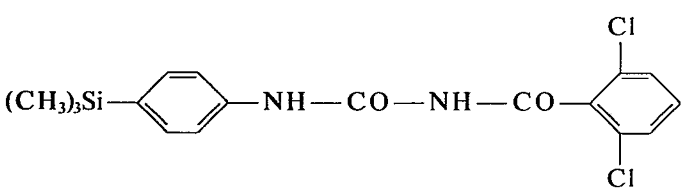

6. Insektizides Mittel nach Anspruch 2 enthaltend eine Verbindung der Formel

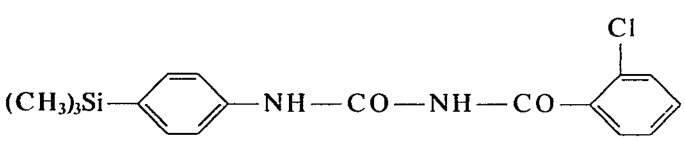

7. Verfahren zur Herstellung von in einem der Ansprüche 1 bis 6 definierten Verbindungen, dadurch gekennzeichnet, daß man eine Verbindung der Formel II

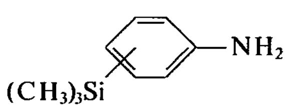

(II)

mit einer Verbindung der Formel III

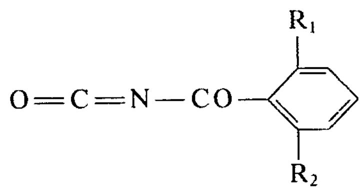

(III)

worin $R_1$ und $R_2$ die entsprechenden, in einem der Ansprüche 1 bis 6 angegebenen Bedeutungen haben, umsetzt oder eine Verbindung der Formel IV

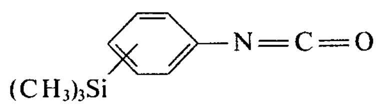

(IV)

mit einer Verbindung der Formel V

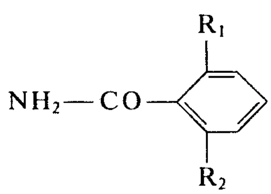

(V)

worin $R_1$ und $R_2$ die oben angegebenen Bedeutungen haben, umsetzt.

8. Verwendung von einer der in einem der Ansprüche 1 bis 6 genannten Verbindungen zur Bekämpfung von Insekten.

**Claims for the Contracting States: BE, CH, DE, FR, GB, IT, NL**

1. A compound of the formula I

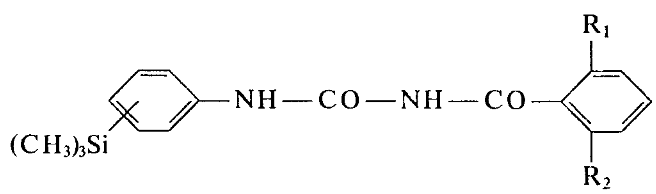

(I)

wherein $R_1$ is fluorine or chlorine, and $R_2$ is hydrogen, fluorine or chlorine.

2. A compound as claimed in Claim 1 of the formula IA

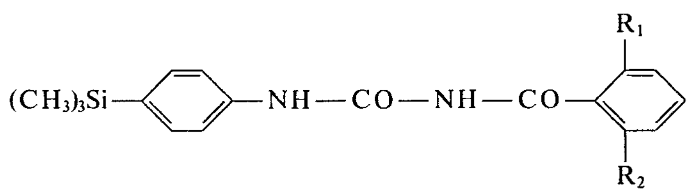

(IA)

wherein $R_1$ and $R_2$ have the meanings given in Claim 1.

3. A compound as claimed in Claim 2 of the formula

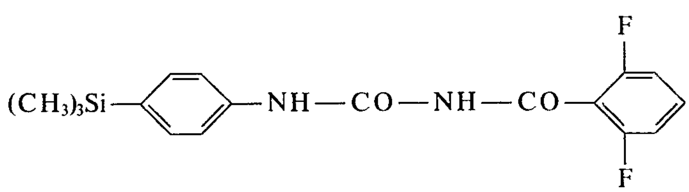

4. A compound as claimed in Claim 2 of the formula

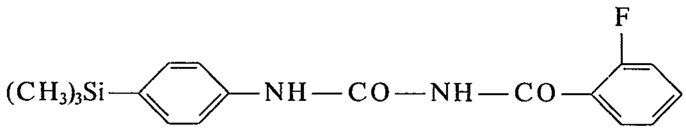

5. A compound as claimed in Claim 2 of the formula

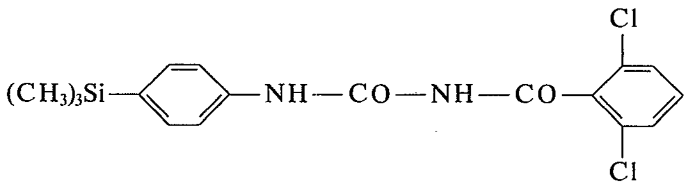

6. A compound as claimed in Claim 2 of the formula

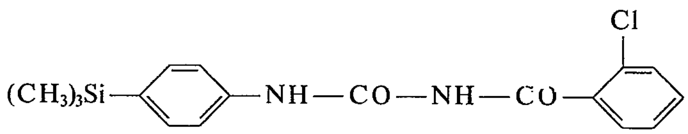

7. A process for the production of a compound as claimed in any one of Claims 1 to 6, which process comprises reacting a compound of the formula II

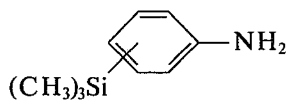

(II)

with a compound of the formula III

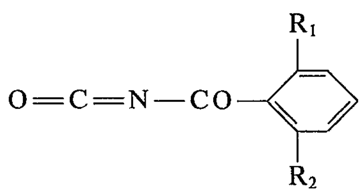

(III)

wherein $R_1$ and $R_2$ have the corresponding meanings given in any one of Claims 1 to 6; or reacting a compound of the formula IV

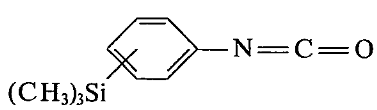

(IV)

with a compound of the formula V

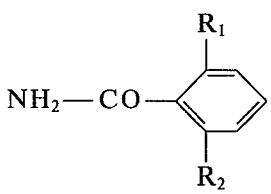

(V)

wherein $R_1$ and $R_2$ have the meanings given above.

8. An insecticidal composition containing as active ingredient a compound as claimed in any one of Claims 1 to 6.

9. A method of controlling insect pests at a locus, which method comprises applying to said locus an effective amount of a compound as claimed in any one of Claims 1 to 6.

**Claims for the Contractin State: AT**

1. An insecticidal composition containing as active ingredient a compound of the formula I

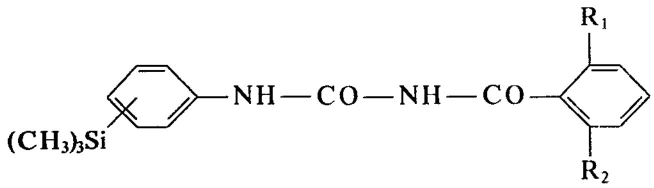

(I)

wherin $R_1$ is a fluorine or chlorine atom, and $R_2$ is a hydrogen, fluorine or chlorine atom.

2. An insecticidal composition according to Claim 1 containing a compound of the formula IA

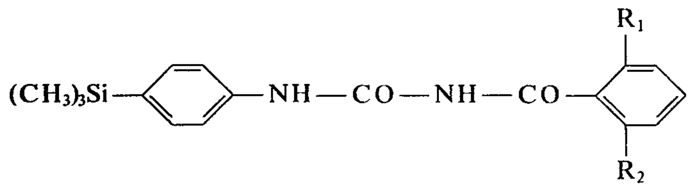

(IA)

wherin $R_1$ and $R_2$ have the meanings given in Claim 1.

3. An insecticidal composition according to Claim 2 containing a compound of the formula

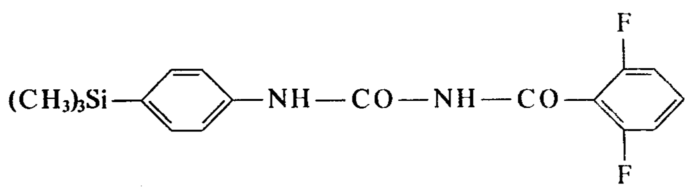

4. An insecticidal composition according to Claim 2 containing a compound of the formula

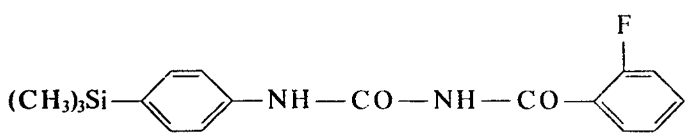

5. An insecticidal composition according to Claim 2 containing a compound of the formula

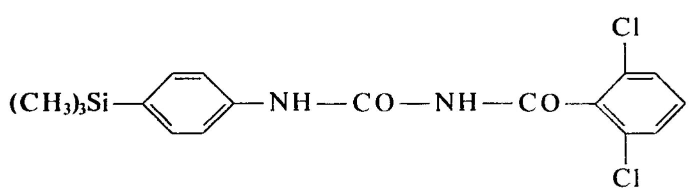

6. An insecticidal composition according to Claim 2 containing a compound of the formula

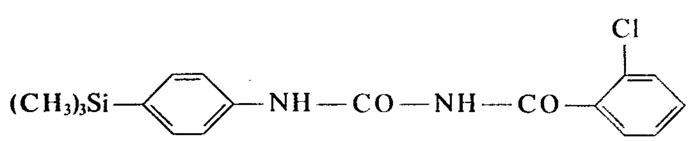

7. A process for the production of a compound as defined in any one of Claims 1 to 6, which process comprises reacting a compound of the formula II

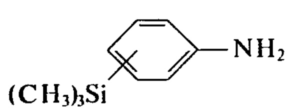

(II)

with a compound of the formula III

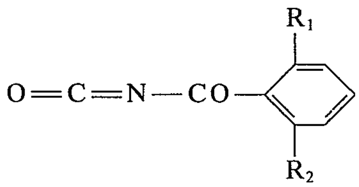

(III)

wherin $R_1$ and $R_2$ have the corresponding meanings given in any one of Claims 1 to 6; or reacting a compound of the formula IV

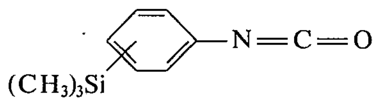

(IV)

with a compound of the formula V

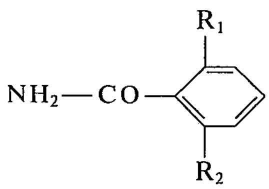

(V)

wherin $R_1$ and $R_2$ have the meanings given above.

8. A method of controlling insect pests at a locus, which method comprises applying to said locus an effective amount of a compound as claimed in any one of Claims 1 to 6.

**Revendications pour les Etats contractants: BE, CH, DE, FR, GB, IT, NL**

1. Un composé de formule I

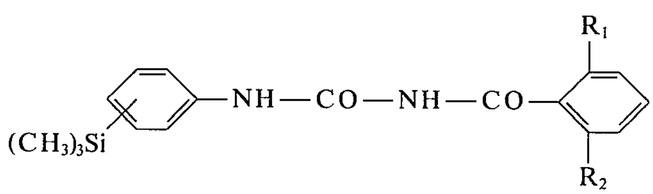

(I)

dans laquelle $R_1$ représente un atome de fluor ou de chlore et $R_2$ un atome d'hydrogène, de fluor ou de chlore.

2. Composé selon la revendication 1, de formule IA

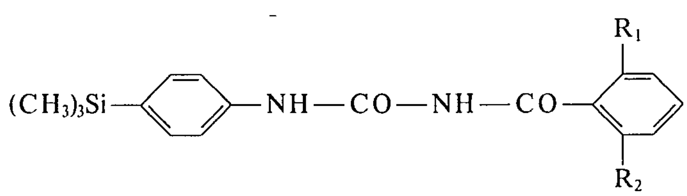

(IA)

dans laquelle $R_1$ et $R_2$ ont les significations indiquées dans la revendication 1.

3. Composé selon la revendication 2, de formule

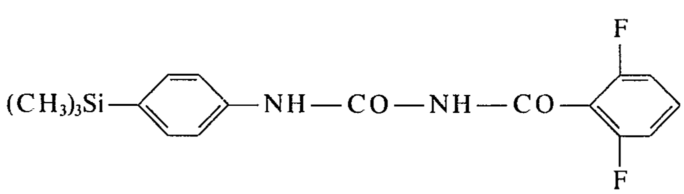

4. Composé selon la revendication 2, de formule

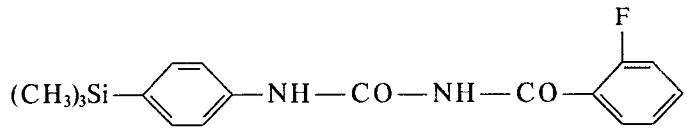

5. Composé selon la revendication 2, de formule

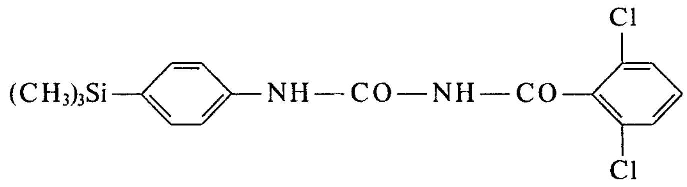

6. Composé selon la revendication 2, de formule

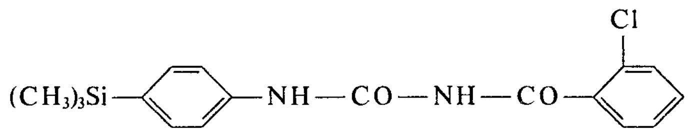

7. Procédé de préparation des composés mentionnés dans l'une des revendications 1 à 6, caractérisé en ce que l'on fait réagir un composé de formule II

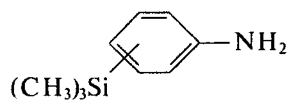

(II)

avec un composé de formule III

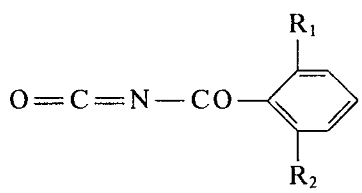

(III)

dans laquelle $R_1$ et $R_2$ ont les significations correspondantes, indiquées dans l'une des revendications 1 à 6, ou bien on fait réagir un composé de formule IV

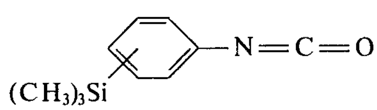

(IV)

avec un composé de formule V

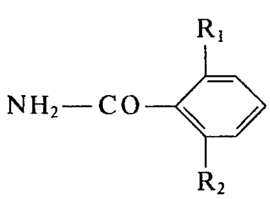

(V)

dans laquelle $R_1$ et $R_2$ ont les significations indiquées ci-dessus.

8. Produit insecticide contenant en tant que composant activ l'un des composés mentionnés dans l'une des revendications 1 à 6.

9. Utilisation d'un des composés mentionnés dans l'une des revendications 1 à 6 dans la lutte contre les insectes.

**Revendications pour l'Etat contractant: AT**

1. Produit insecticide contenant en tant que composant activ un composé de formule I

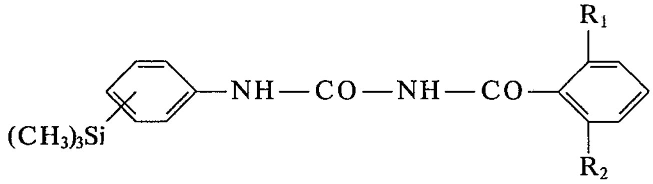

(I)

dans laquelle $R_1$ représente un atome de fluor ou de chlore et $R_2$ représente un atome d'hydrogène, de fluor ou de chlore.

2. Produit insecticide selon la revendication 1, contenant un composé de formule IA

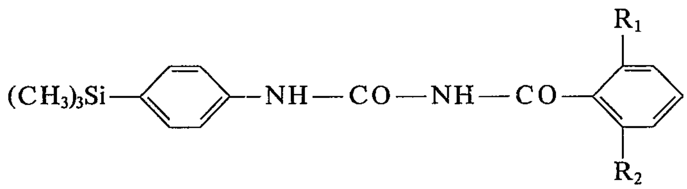

(IA)

dans laquelle $R_1$ et $R_2$ ont les significations indiquées dans la revendication 1.

3. Produit insecticide selon la revendication 2, contenant un composé de formule

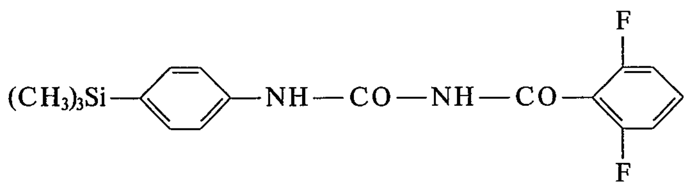

4. Produit insecticide selon la revendication 2, contenant un composé de formule

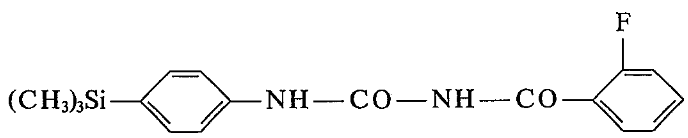

5. Produit insecticide selon la revendication 2, contenant un composé de formule

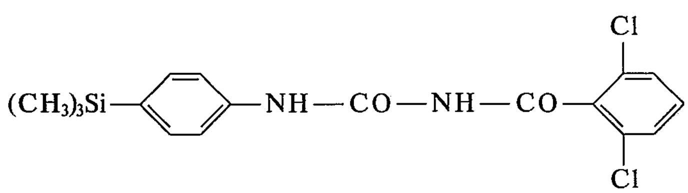

6. Produit insecticide selon la revendication 2, contenant un composé de formule

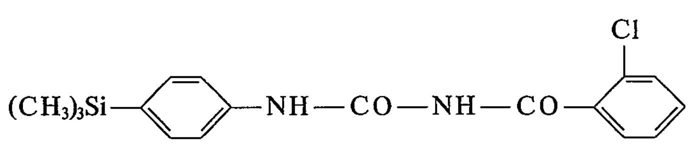

7. Procédé de préparation des composés définis dans l'une des revendications 1 à 6, caractérisé en ce que l'on fait réagir un composé de formule II

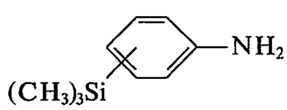

(II)

avec un composé de formule III

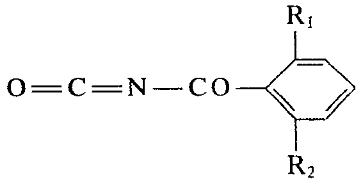

(III)

dans laquelle $R_1$ et $R_2$ ont les significations correspondantes, indiquées dans l'une des revendications 1 à 6, ou bien on fait réagir un composé de formule IV

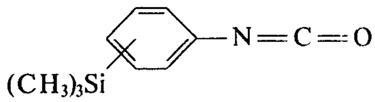

(IV)

avec un composé de formule V

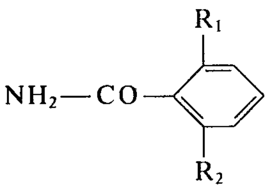

(V)

dans laquelle $R_1$ et $R_2$ ont les significations indiquées ci-dessus.

8. Utilisation de l'un des composés mentionnés dans l'une des revendications 1 à 6, dans la lutte contre les insectes.